# EUROPEAN PATENT APPLICATION

(11) **EP 4 582 473 A1**
(43) Date of publication of application: **09.07.2025**
(21) Application number: 24150243.4
(22) Date of filing: 03.01.2024
(51) Int. Cl.: C08J 11/10

(54) **METHOD FOR POLYMER DEGRADATION MAKING USE OF AT LEAST ONE FUNGUS**

(71) Applicant: Rheiazymes AG, 8810 Horgen (CH)
(72) Inventor: Grimmer, Roland, 8810 Horgen (CH); Ramirez Carmona, Margarita Enid, 8810 Horgen (CH); Ocampo Lopéz, Carlos, 8810 Horgen (CH); Rendon Castrillón, Leidy Johanna, 8810 Horgen (CH)
(74) Representative: E. Blum & Co. AG

(57) **Abstract**

The present invention relates to a method of degrading a polymer (1) comprising the following steps of producing a metabolite composition (4) and at least partial depolymerisation of the polymer (1) to thereby obtain a degraded polymer (2), and optionally further steps.. The invention further relates to a method of manufacturing a metabolite composition (4) that is useful for the degradation of a polymer (1). The metabolite composition is produced by incubating a polymeric matrix (5) in an incubation medium (6) comprising at least one fungus (7), followed by removal of the at least one fungus.

## Description

### Technical Field

The present invention relates to the field of polymer degradation. In particular, the invention relates to recycling methods for polymers.

### Background art

It is widely recognized that the accumulation of large amounts of non-recycled plastic waste is one of the largest environmental challenges today. According to a recent OECD report, production of plastic waste has doubled over the last 20 years [OECD (2022), Global Plastics Outlook: Economic Drivers, Environmental Impacts and Policy Options]. It is estimated that only about 9% of plastic waste is successfully recycled today, while the bulk of it ends up in landfill, being incinerated or leaking into the environment. The low fraction of recycled plastic waste is at least partially due to unresolved technical issues concerning degradation of synthetic polymers.

In particular, elastane, also referred to as Lycra or spandex, which is commonly used in textiles, poses a challenge in terms of recycling. Even a 1 - 5% inclusion of elastane typically renders mixed materials comprising elastane, such as many garments, incompatible with standard recycling machines. A possibility to remove elastane from such mixed materials is dissolving it in organic solvents such as *N,N*-dimethylformamide [Vonbrül et al., Resources, Conservation & Recycling (2024), 200; 107302). However, the use of large amounts of organic solvents is undesirable for both economic and environmental reasons.

In addition, degradation of certain polymers, including elastane, using bacteria has been described. However, since bacteria are typically sensitive to contamination, these processes typically require sterile conditions. Thus methods for polymer degradation using bacteria is laborious and relatively expensive, which limits its application at commercial scale.

Accordingly, there is an urgent need to develop methods for polymer degradation that do not rely on organic solvents, while being economically feasible at large scale.

### Disclosure of the invention

The above objective is achieved by a method for degrading a polymer as defined in claim 1 and a method for manufacturing a metabolite composition as defined in claim 14. Advantageous embodiments are disclosed in the specification and the dependent claims.

The present invention will be described in more detail below. It is understood that the various embodiments, preferences and ranges as provided / disclosed in this specification may be combined at will.

Unless otherwise stated, the following definitions shall apply in this specification:
The terms "a", "an", "the" and similar terms used in the context of the present invention, especially in the context of the claims, are to be construed to cover both the singular and plural unless otherwise indicated herein or clearly contradicted by the context.

The terms "including", "containing" and "comprising" are used herein in their open, non-limiting sense.

In a **first aspect,** the invention relates to a method of degrading a polymer (1), wherein the method comprises the following steps:
a) producing a metabolite composition (4), and
b) at least partial depolymerisation of the polymer (1) to thereby obtain a degraded polymer (2).

Step a) comprises the following sub-steps:
a-1) Providing a polymeric matrix (5) and an incubation medium (6), wherein the incubation medium comprises at least one fungus (7) and a culture medium (8);
a-2) incubating the polymeric matrix (5) in the incubation medium (6) to thereby obtain a fermented broth (9); and
a-3) removing the at least one fungus (7) from the fermented broth (9) to thereby obtain the metabolite composition (4).

Step b) comprises the following sub-steps:
b-1) Incubating the polymer (1) with the metabolite composition (4); and
b-2) separating said degraded polymer (2) from solid remnants (3).

An advantage of said method is that essentially no organic solvents are required. Instead, the polymer (1) is at least partially degraded through incubation with the metabolite composition (4), which is obtained by incubating a fungus (7) with a polymeric matrix (5) in a culture medium (6).

A further advantage of the method is that bacteria are not required. Instead, it has been surprisingly found that fungi can be used to produce a metabolite composition that can be used to degrade polymers, particularly elastane. Fungi have the advantage that they are less sensitive to contamination than bacteria, which renders the method more robust than methods relying on bacteria. In addition, it is not required to incubate the fungi under sterile conditions, i.e., under conditions where contamination with other microorganisms is prevented. Thus, the process is more cost-efficient than previous processes, which is highly relevant at commercial scale.

Moreover, removal of the fungi (7) from the fermented broth (9), which represents an intermediate in the production of said metabolite composition, has the advantage that the fungi do not adhere to said polymer (1). This is particularly relevant for the recycling of mixed materials.

Optionally, the method may comprise further steps.

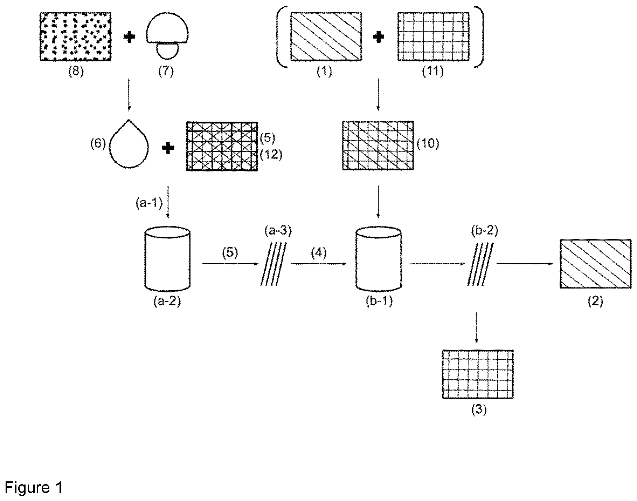

A schematic representation of the method described herein is shown in Figure 1.

Typically, steps a-2) and/or b-1) are performed in a bioreactor. It is considered particularly beneficial that steps a-2) and/or b-1) may be performed under non-sterile conditions. Accordingly, the polymeric matrix (5) may be incubated in the incubation medium (6) under non-sterile conditions. Moreover, in step b-1), the polymer (1) may be incubated under non-sterile conditions.

As is common in the field, the term "non-sterile conditions" means that no measures are required to prevent external microorganisms (i.e., other microorganisms than the at least one fungus (7) that is present in the incubation medium) from entering the incubation process. Such measures for "sterile conditions" typically include working under a laminar flow hood equipped with a High Efficiency Particulates Air (HEPA) filter, and rigorous sterilisation of equipment such as bioreactors that may be used for the incubation.

Preferably, in step a-2) the polymeric matrix (5) is incubated in the incubation medium (6) at a about pH 4 for a duration of 6 to 8 days, e.g., 7 days.

In step b-1), the polymer (1) is incubated with the metabolite composition (4) at about pH 4.5 for a duration of 6 to 8 days, e.g., 7 days, preferably at a temperature of 55°C.

In a preferred embodiment, the polymer (1) is part of a mixed material (10) comprising one or more further polymers (11). As is known in the field, recycling of such mixed materials (10) is particularly challenging as it typically requires separation of the individual polymers that are comprised in the mixed material (10). It is considered particularly beneficial that the method described herein is useful for the recycling of mixed materials, in particular mixed materials comprising elastane.

Preferably, the at least one fungus (7) is selected from the group consisting of Penicillium simplicissimum, Aspergillus nomius, and mixtures thereof, preferably Penicillium simplicissimum. Surprisingly, Penicillium simplicissimum and Aspergillus nomius have been found to produce metabolites that are particularly suitable for the degradation of polymers, particularly elastane. Each of Penicillium simplicissimum and Aspergillus nomius may be used separately in the context of the present invention but may also be used in combination. The fungus penicillium simplicissimum is sometimes also referred to as Penicillium jantinellum.

As used herein, "at least partial depolymerisation" refers degradation of polymer (1), thereby yielding a degraded polymer (2), wherein the degraded polymer (2) is not necessarily entirely depolymerized (i.e., not degraded to its monomeric units). Typically, a degraded polymer has a lower molecular weight than the starting polymer. Preferably, the average molecular weight of a degraded polymer (2) is at least 20% lower, more preferably at least 50% lower, than the average molecular weight of the starting polymer (1). For example, a polymer (1) having an average molecular weight of about 20000 Da may be partially degraded yielding a degraded polymer (2) having an average molecular weight of about 10000 Da. The term "at least partial depolymerisation" is used herein synonymously to "at least partial degradation".

The term "polymeric matrix" (5) refers to a mixture of matrix polymers (12). The polymers of said "polymeric matrix" may be added separately to the culture medium or may be provided in a combined form, e.g., in the form of a tablet or a cake structure comprising the polymers.

Preferably, the polymeric matrix (5) comprises one or more matrix polymers (12) selected from the group consisting of synthetic polymers and semi-synthetic polymers. In the context of the polymeric matrix (5), synthetic polymers are preferably selected from the group consisting of polyurethane, elastane, polyamide (e.g., nylon), polyethylene glycol (PEG), polyester (e.g., polyethylene terephthalate; PET), silicone, polyethylene, polypropylene, and cellulose-derivatives. For example, the polymeric matrix (5) may comprise ground polyethylene-coated cardboard, polyamide, elastane, polyethylene, vulcanised rubber, and polyurethane.

Suitable polyethylene-coated cardboard materials are known and include common Tetra Pak cardboard packaging materials (see e.g., https:/ /www.tetrapak.com/de/sol utions/packag i ng/pa ckag ing-material/material s#).

As is known in the field, elastane (synonymously spandex or lycra) is a mixture of polyurethane and polyethylene glycol.

As is further known in the field, suitable synthetic materials may be made from natural polymers, in particular made from cellulose thereby yielding cellulose-derivatives such as cellulose acetate and nitrocellulose. As the skilled person understands, cellulose derivatives include materials containing a characteristic backbone of cellulose wherein one or more of the hydroxyl groups are substituted, e.g. by nitro- or acetate groups. Such synthetic materials are sometimes also referred to as semi-synthetic materials because they are made from natural polymers. Suitable synthetic materials that are made from natural polymers (semi-synthetic materials) further preferably include natural vulcanized rubber.

As is known in the field, the term "vulcanization" of rubber refers to a method of hardening rubber by a cross-linking reaction using sulfur. Vulcanization leads to the formation of three-dimensional network structures in rubber. Vulcanization can also be referred to as the curing of elastomers, such as natural rubber. The term "natural rubber" is known in the field and refers to an elastic material comprising polyisoprene elastomers.

Natural polymers are polymers of natural origin, i.e., they can be found in nature. In particular, natural polymers include cellulose, cotton, wool, silk, cashmere and mixtures thereof.

The polymers (1) that can be degraded using the method described herein are the same polymers that have been described in the context of the polymeric matrix (5). Accordingly, the polymer (1) is preferably selected from the group consisting of synthetic polymers and natural polymers, wherein
- synthetic polymers are selected from the group consisting of polyurethane, elastane, polyamide, polyester, silicone, polyethylene, polypropylene, natural vulcanized rubber, and cellulose-derivatives, preferably elastane; and
- natural polymers are selected from the group consisting of cellulose, cotton, wool, silk, cashmere and mixtures thereof.

Preferably, the polymer (1) that is to be degraded is also present in the polymeric matrix (5) or comprises the same functional groups, such as urethane groups, ester groups, and/or amide groups.

In a preferred embodiment, the polymeric matrix (5) comprises elastane and the polymer (1) is elastane.

The term "incubation medium" (6) relates to the liquid medium in which the polymeric matrix (5) is incubated. The incubation medium (6) comprises the at least one fungus and a culture medium (8). The culture medium (8) comprises nutrition to support the growth of the at least one fungus. For example, the culture medium (8) may comprise beet root sugar, urea, potassium hydrogen phosphate, and magnesium sulphate heptahydrate. Preferably, the culture medium (8) further comprises trace elements selected from the group consisting of ferrous sulphate, manganese sulphate, zinc sulphate and calcium sulphate. Advantageously, such trace elements are present in a total concentration of about 15-25wt.%, such as about 20 wt%. An illustrative culture medium comprises beet root sugar (120 g), urea (0.15 g), potassium hydrogen phosphate (0.8 g), magnesium sulphate heptahydrate (0.8 g), and 20 wt.% of trace elements, wherein the trace elements are ferrous sulphate, manganese sulphate, zinc sulphate, calcium sulphate.

As used herein, the term "fermented broth" relates to the mixture obtained after incubation of the polymeric matrix in the incubation medium (6). The "fermented broth" (9) thus contains the polymeric matrix (5), the at least one fungus (7) and metabolites that have been produced by the one or more fungus during the incubation.

As used herein, the term "metabolite composition" relates to the liquid that is obtained after the at least one fungus (7) has been removed from the fermented broth. For example, the at least one fungus (7) may be removed from the fermented broth (9) via filtration. As the skilled person understands, removal of the at least one fungus (7), e.g., by filtration, simultaneously leads to removal of the polymeric matrix (5) from the fermented broth. The metabolite composition (4) is thus essentially free of fungi and essentially free of solids but contains the metabolites that have been produced by the at least one fungus (7) during incubation in the presence of the polymeric matrix (5).

The term "solid remnants" relates to solid material that remains after incubation of a polymer (1), i.e., the polymer that is to be degraded (i.e., at least last partial depolymerisation), with the metabolite composition (4). The solid remnants (3) may contain non-degraded polymers, e.g., a non-degraded fraction of the polymer (1) and/or the one or more further polymers (11) if the polymer (1) was part of a mixed material (10). Preferably, the solid remnants (3) comprise the one or more further polymers (11), said one or more further polymers (11) being non-degraded and being different from the first polymer (1).

As is common in the field, the term "mixed material" relates to a material that is comprised of at least two different components (polymers). Such mixed materials are widely used for both consumer goods and industrial goods. For example, such mixed materials are often used for textiles, such as textile fabrics, e.g., in garments comprising a mixture of
- polyamide and elastane,
- polyester and elastane, or
- cotton and elastane.

In certain embodiments, the mixed material is a textile, particularly a textile fabric, e.g., a garment.

The term "mixed material" also encompasses the term "composite material" that is often used in the context of industrial goods.

The term "textile fabric" is known in the field and particularly relates to textile materials made from fibres. Textile fabrics include woven fabrics, knitted fabrics and non-woven fabrics.

The term "woven fabric" is known in the field and relates to a fabric formed by weaving. Woven fabrics are often created on a loom, and made of many threads woven on a warp and a weft. A woven fabric is made by interlacing two or more threads at right angles to one another.

The term "knitted fabric" is known in the field and relates to a fabric made (i.e. knitted) of thread systems by forming stitches on a knitting machine. Knitted fabrics are commonly used, for example, to make underwear or bedclothes.

The term "non-woven fabric" is known in the field and relates to sheet or web structures bonded together by entangling fiber or filaments (and by perforating films) mechanically, thermally or chemically. The term is used to denote fabrics that are neither knitted nor woven.

In step a-2) the polymeric matrix (5) is preferably incubated in the incubation medium (6) at a pH of 4 for a duration of 6 to 8 days, e.g., 7 days, and the polymeric matrix (5) comprises ground polyethylene-coated cardboard, polyamide, elastane, polyethylene, natural vulcanized rubber, and polyurethane.

In a **second aspect,** the invention relates to a method for manufacturing a metabolite composition (4) as described above. The method for manufacturing comprises step a as described above (first aspect). Step a) comprises the following sub-steps:
a-1) Providing a polymeric matrix (5) and an incubation medium (6), wherein the incubation medium comprises at least one fungus (7) and a culture medium (8);
a-2) incubating the polymeric matrix (5) in the incubation medium (6) to thereby obtain a fermented broth (9); and
a-3) removing the at least one fungus (7) from the fermented broth (9) to thereby obtain the metabolite composition (4).

Definitions and preferred embodiments described in the context of the first aspect relating to step a) apply likewise in the context of the second aspect. In particular the following preferred embodiments apply:
The at least one fungus (7) is preferably selected from selected from the group consisting of Penicillium simplicissimum, Aspergillus nomius, and mixtures thereof, more preferably Penicillium simplicissimum.

The polymeric matrix (5) preferably comprises one or more matrix polymers (12) selected from the group consisting of synthetic polymers and natural polymers. Synthetic polymers are preferably selected from the group consisting of polyurethane, elastane, polyamide, polyester, silicone, polyethylene, polypropylene, natural vulcanized rubber, and cellulose-derivatives, preferably elastane.

Natural polymers are preferably selected from the group consisting of cellulose, cotton, wool, silk, cashmere and mixtures thereof.

For example, the polymeric matrix (5) may comprise ground polyethylene-coated cardboard, polyamide, elastane, polyethylene, natural vulcanized rubber, and polyurethane.

Preferably, the culture medium (8) comprises beet root sugar, urea, potassium hydrogen phosphate, and magnesium sulphate heptahydrate. Preferably, the culture medium (8) further comprises trace elements selected from the group consisting of ferrous sulphate, manganese sulphate, zinc sulphate and calcium sulphate.

Preferably, the polymeric matrix (5) is incubated in the incubation medium (6) is incubated in the incubation medium (6) at about pH 4 for a duration of 6 to 8 days, e.g., 7 days.

In an advantageous embodiment, step a-2) is performed under non-sterile conditions, i.e., the polymeric matrix (5) is incubated under non-sterile conditions.

In a preferred embodiment, the polymeric matrix (5) comprises polyurethane, preferably elastane, and the at least one fungus (7) is Penicillium simplicissimum.

### Brief description of the figures

The invention will be better understood and objects other than those set forth above will become apparent when consideration is given to the following description of the annexed figures:
**Figure 1****:** Process Flow Diagram illustrating the inventive method:
Step a: Production of a metabolite composition (4), including:
   a-1: Providing a **polymeric matrix** (5) and an **incubation medium** (6) comprising at least one **fungus** (7) and a **culture medium** (8);
   a-2: Incubating the **polymeric matrix** (5) in the **incubation medium** (6) to thereby obtain a **fermented broth** (9), and
   a-3: Removing the at least one **fungus** (7) from the **fermented broth** (9) to thereby obtain the **metabolite composition** (4),
Step b: At least partial depolymerisation of the polymer (1), including:
   b-1: Incubating the polymer (1) with the metabolite composition (4), and
   b-2: Separating degraded polymer (2) from solid remnants (3).
For illustrative purposes, the **polymer** (1), i.e., the polymer that is to be degraded, is shown as being part of a **mixed material** (10) comprising one or **more further polymers** (11).
The **polymeric matrix** (5) comprises one or more **matrix polymers** (12).

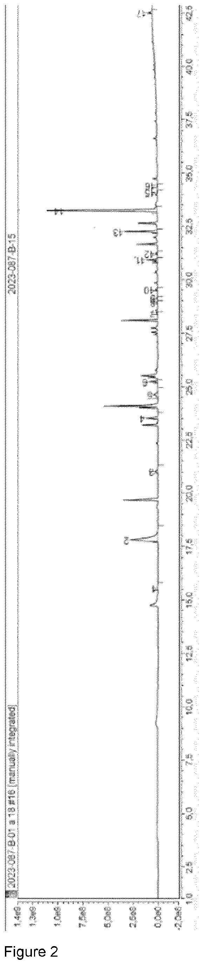

**Figure 2****:** Quadrupole time-of-flight liquid chromatography / mass spectrometry (Q-ToF-LC/MS) analysis showing degradation of elastane using the inventive method. In order to increase readability, the chromatogram is
Signal annotation is shown in table 1 below.

**Table 1. Signal annotation Q-ToF-LC/MS**

| No. | Ret. Time | 1st Hit | Prob | Library Compound | 2nd Hit | Library Compound |
|---|---|---|---|---|---|---|
| | min | SI | % | | SI | |
| 1 | 15,556 | 619 | 32.36 | Phosphonoacetic Acid, 3TMS derivative | 604 | Fluoren-9-ol, 3,6-dimethoxy-9-(2-phenylethynyl)- |
| 2 | 17,809 | 847 | 87.62 | Acetoin | 711 | L-Lactic acid |
| 3 | 21,013 | 890 | 81.01 | Ethanol, 2-butoxy- | 811 | Ethylene glycol monoisobutyl ether |
| 4 | 23,523 | 698 | 32.14 | Isovanillin, TBDMS derivative | 694 | Vanillin, TBDMS derivative |
| 5 | 24,615 | 790 | 60.75 | 2,3-Butanediol, [S-(R*,R*)]- | 765 | 2,3-Butanediol, [R-(R*,R*)]- |
| 6 | 25,229 | 681 | 70.84 | Phosphonoacetic Acid, 3TMS derivative | 641 | Silane, dimethyl(dimethyl(dimethyl(2-isopropylphenoxy)silyloxy)silyloxy)( 2-isopropylphenoxy)- |
| 7 | 28,460 | 838 | 34.36 | a-Terpineol | 823 | L-a-Terpineol |
| 8 | 28,946 | 817 | 95.27 | 1-Propanol, 3-(methylthio)- | 648 | 3-Mercaptopropionic acid |
| 9 | 29,148 | 643 | 9.95 | 2-(4-Nitrobutyryl)cyclooctanone | 623 | Z-(13,14-Epoxy)tetradec-11-en-1-ol acetate |
| 10 | 29,526 | 648 | 53.22 | Oxime-, methoxy-phenyl-_ | 581 | 4-Ethylbenzoic acid, 2-butyl ester |
| 11 | 30,932 | 833 | 46.32 | 3,6-Octadien-1-ol, 3,7-dimethyl-, (Z)- | 766 | (1R,2R,5S)-5-Methyl-2-(prop-1-en-2-yl)cyclohexanol |
| 12 | 31,236 | 820 | 25.63 | Acetic acid, 2-phenylethyl ester | 784 | Formic acid, 2-phenylethyl ester |
| 13 | 32,261 | 904 | 95.23 | Propanoic acid, 2-methyl-, 3-hydroxy-2,2,4-trimethylpentyl ester | 776 | Propanoic acid, 2-methyl-, 2-ethyl-3-hydroxyhexyl ester |
| 14 | 33,246 | 942 | 89.04 | Phenylethyl Alcohol | 839 | Hydrazine, (phenylmethyl)- |
| 15 | 34,112 | 624 | 3.49 | Methyl 4,6-decadienyl ether | 621 | 1-Hexadecanol |
| 16 | 34,413 | 786 | 56.21 | 1,2-Benzisothiazole | 765 | Benzothiazole |
| 17 | 42,524 | 730 | 44.85 | 2-(Methylthio)phenyl isothiocyanate | 721 | 2-(Methylmercapto)benzothiazole |

At least signals 4, 5, 12, 13, 14, 16 and 17 are indicative for degradation of elastane.
**Figure 3****:** Scanning electron microscope (SEM) images of the textile (mixed material) before (left) and after (right) incubation with the metabolite composition are shown. After incubation, the remaining textile is obtained as solid remnant (right). It can be seen that the elastane that was present in the textile (mixed material) was at least partially degraded.
**Figure 4****:** Graphical representation of the elastane content of the textile before (left) and after (right) incubation with the metabolite composition.

### Examples

To further illustrate the invention, the following examples are provided. These examples are provided with no intend to limit the scope of the invention.

### Example 1 (Production of a metabolite composition; step a):

### a-1:

One liter of the metabolite composition was prepared as follows:
A submerged fermentation was prepared, using as an inoculum 10% of a spore wash of a mixed culture of filamentous fungi (Penicillium simplicissimum, and Aspergillus nomius) and a culture medium comprising: beet root sugar (120 g), urea (0.15 g), dipotassium acid phosphate (0.8 g), magnesium sulfate heptahydrate (0.8 g), and 20 wt.% of trace elements (ferrous sulfate, manganese sulfate, zinc sulfate and calcium sulfate).

The polymeric matrix was prepared as follows: The polymer materials were ground using a blade mill and passed through a sieving system until a particle size corresponding to 10 mesh was reached. The polymeric matrix had the following composition: Silicone (2g), polyethylene-coated cardboard (Tetra Pak cardboard packaging; 0.5 g), polyamide/elastane (4:1) (0.2 g), polyethylene (0.01 g), natural vulcanized rubber (1 g), polyurethane (0.05 g), and elastane (0.4 g).

The incubation medium was adjusted to a pH of 4.0 with a dilute solution of hydrochloric acid,

### a-2:

The polymeric matrix was incubated in the incubation medium (comprising the culture medium and the fungi) to at a mechanical agitation of 200 rpm and an operational time of 7 days, thereby yielding a fermented broth.

### a-3:

After incubation, the fungi (i.e., the biomass produced during incubation) and the polymeric matrix were removed from the fermented broth using a vacuum filtration system. The metabolite composition was thereby obtained as liquid phase.

### Example 2 (Depolymerization; step b)

### b-1:

The metabolite composition produced in Example 1 was brought into contact with a textile (i.e., a mixed material comprising the polymer (1; elastane) and a further polymer (polyamide 6) composed of 59 wt.% polyamide 6 and 41 wt.% elastane, using a mass ratio of 1 wt.% between the textile and the metabolite composition. The mixture was adjusted to a pH of 4.5 using a diluted solution of sodium hydroxide. Incubation was performed at a fixed temperature of 55°C for 7 days under mechanical agitation at 150 rpm.

During the incubation the elastane component of the mixed material was degraded (see Figure 2).

### b-2:

After incubation (degradation of the polymer, i.e., elastane), the degraded elastane was separated from solid remnants via vacuum filtration. The solid remnants contain the not fully degraded fraction of the textile. The solid remnants were washed with osmotized water, filtered under vacuum and dried in a convection oven at 60°C for 24 hours.

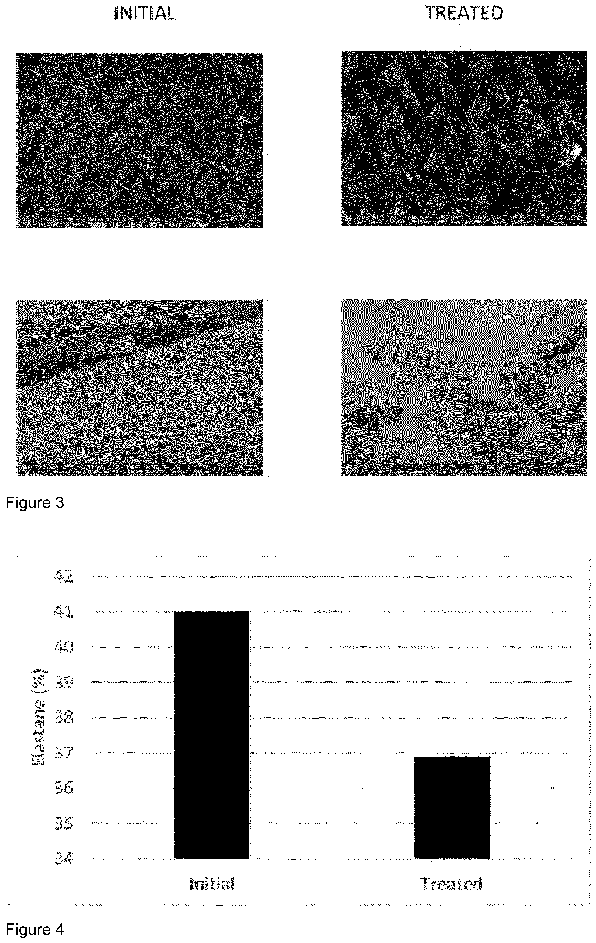

SEM images of the textile (mixed material) before (left) and after (right; solid remnants) incubation with the metabolite composition are shown in Figure 3 and the elastane content (wt. %) of the solid remnants is graphically shown in Figure 4. This data shows that elastane, i.e., the polymer (1), has been at least partially degraded using the inventive method.

## Claims

1. A method of **degrading a polymer** (1) comprising the following steps:
a) producing a **metabolite composition** (4),
b) at least partial depolymerisation of the polymer (1) to thereby obtain a **degraded polymer** (2), and
c) optionally further steps,
wherein step a) comprises:
a-1) Providing a **polymeric matrix** (5) and an incubation medium (6) comprising at least one **fungus** (7) and a **culture medium** (8), and
a-2) incubating the polymeric matrix (5) in the incubation medium (6) to thereby obtain a fermented broth (9), and
a-3) removing the at least one fungus (7) from the fermented broth (9) to thereby obtain the **metabolite composition** (4),
wherein step b) comprises:
b-1) incubating the polymer (1) with the metabolite composition (4), and
b-2) separating said degraded polymer (2) from solid remnants (3).

2. The method according to claim 1, wherein said **polymer** (1) is part of a mixed material (10) comprising one or more further polymers (11).

3. The method according to claim 1, wherein
the at least one **fungus** (7) is selected from the group consisting of Penicillium simplicissimum, Aspergillus nomius, and mixtures thereof.

4. The method according to one of the previous claims, wherein
the **polymeric matrix** (5) comprises one or more matrix polymers (12) selected from the group consisting of synthetic polymers and natural polymers,
wherein
synthetic polymers are selected from the group consisting of polyurethane, elastane, polyamide, polyester, silicone, polyethylene, polypropylene, natural vulcanized rubber, and cellulose-derivatives, and
natural polymers are selected from the group consisting of cellulose, cotton, wool, silk, cashmere and mixtures thereof.

5. The method according to one of the previous claims, wherein
the **polymer (1)** is selected from the group consisting of synthetic polymers and natural polymers, wherein
synthetic polymers are selected from the group consisting of polyurethane, elastane, polyamide, polyester, silicone, polyethylene, polypropylene, natural vulcanized rubber, and cellulose-derivatives, and
natural polymers are selected from the group consisting of cellulose, cotton, wool, silk, cashmere and mixtures thereof.

6. The method according to one of the previous claims, wherein the polymeric matrix (5) comprises elastane and the polymer (1) is elastane.

7. The method according to one of the previous claims, wherein the **culture medium** (8) comprises beet root sugar, urea, potassium hydrogen phosphate, and magnesium sulphate heptahydrate.

8. The method according to claim 7, wherein the culture medium (8) further comprises trace elements selected from the group consisting of ferrous sulphate, manganese sulphate, zinc sulphate and calcium sulphate.

9. The method according to any one of claims 2 to 7, wherein the **solid remnants** (3) comprise the one or more further polymers (11), said one or more further polymers (11) being non-degraded and being different from the first polymer (1).

10. The method according to one of the previous claims, wherein
in step a-2) the polymeric matrix (5) is incubated in the incubation medium (6) at pH 4 for a duration of 6 to 8 days, wherein
the polymeric matrix (5) comprises ground polyethylene-coated cardboard, polyamide, elastane, polyethylene, natural vulcanized rubber, and polyurethane.

11. The method according to one of the previous claims, wherein in step a-2) the polymeric matrix (5) is incubated under non-sterile conditions.

12. The method according to one of the previous claims, wherein in step b-1) the polymer (1) is incubated with the metabolite composition (4) at pH 4.5 for a duration of 6 to 8 days, preferably at a temperature of 55°C.

13. The method according to one of the previous claims, wherein in step b-1) the polymer (1) is incubated under non-sterile conditions.

14. **A method for manufacturing a metabolite composition** (4) as defined in claim 1, wherein the method comprises step a) as defined in claim 1, preferably wherein
• the at least one fungus (7) is as defined in claim 3; and/or
• the polymeric matrix (5) is as defined in claim 4; and/or
• the culture medium (8) is as defined in claims 7 and/or 8; and/or
• the polymeric matrix (5) is incubated in the incubation medium (6) under conditions as defined in claims 10 and/or 11.

15. The method for manufacturing a metabolite composition (4) according to claim 14, wherein
• the polymeric matrix (5) comprises polyurethane, preferably elastane, and
• the at least one fungus (7) is Penicillium simplicissimum.
